# EUROPÄISCHE PATENTSCHRIFT

(11) **EP 3 785 516 B1**
(45) Veröffentlichungstag und Bekanntmachung des Hinweises auf die Patenterteilung: **06.05.2026**
(21) Anmeldenummer: 20189785.7
(22) Anmeldetag: 06.08.2020
(51) Int. Cl.: A01D 33/00

(54) **BESTIMMUNGSVORRICHTUNG ZUR BESTIMMUNG EINES DATUMS BEIM ERNTEN VON FRÜCHTEN, ENTSPRECHENDE BEHANDLUNGSVORRICHTUNG UND ERNTEMASCHINE**
DEVICE FOR DETERMINING A DATE WHEN HARVESTING FRUITS, CORRESPONDING TREATMENT DEVICE AND HARVESTING MACHINE
DISPOSITIF DE DÉTERMINATION PERMETTANT DE DÉTERMINER UNE DATE DE CUEILLETTE DE FRUITS, DISPOSITIF DE TRAITEMENT CORRESPONDANT ET MACHINE DE CUEILLETTE

(30) Priorität: 27.08.2019 DE 102019122905
(43) Veröffentlichungstag der Anmeldung: 03.03.2021
(73) Patentinhaber: Exel Industries, 51200 Epernay (FR)
(72) Erfinder: BUCH, Johannes, 86989 Steingaden (DE); GALLMEIER, Michael, 84061 Ergoldsbach (DE); SCHWICH, Steffen, 38106 Braunschweig (DE); SCHATTENBERG, Jan, 38159 Vechelde (DE); CRUSE, Carsten, 48249 Dülmen (DE)
(74) Vertreter: Lavoix

(56) Entgegenhaltungen:
- EP-A1- 0 938 837
- EP-A1- 1 101 395
- WO-A1-2018/035082
- WO-A1-99/60839
- DE-A1- 2 914 995

## Beschreibung

Die Erfindung bezieht sich auf ein Erntefahrzeug gemäß dem Oberbegriff des Patentanspruchs 1.

Aus der EP1101395 ist ein Erntefahrzeug zum Ernten von Wurzelfrüchten oder Zuckerrüben bekannt, das an der Vorderseite ein Ernte- oder Rodeeinheit aufweist und bei dem die geernteten Wurzelfrüchte über eine Transportstrecke, die in Fahrzeuglängsrichtung unter dem Fahrzeugrahmen verläuft, an einem Aufwärtsförderer oder Elevator gefördert werden, über den die Wurzelfrüchte dann in einem am Fahrzeugrahmen vorgesehenen Bunker eingebracht werden.

Das Erntefahrzeug umfasst eine Vorrichtung zur Erfassung der geförderten Menge bzw. des Gewichts der Wurzelfrüchte, die aus den Antriebsdaten (Drehmoment/Drehzahl) des Aufwärtsförderers gewonnen werden.

Die erfasste Menge spiegelt jedoch nur die geförderte Menge wieder (i.e. Bruttomenge) und lässt keinen Rückschluss auf die tatsächlich nutzbare Menge der Wurzelfrüchte zu (Nettomenge). Die geförderte Menge umfasst jedoch auch nicht nutzbare Anteile, wie Blätter, beschädigte Wurzelfrüchte, Abschnitte, Steine, Erdklumpen, o. A..

Aus der EP0938837 A1 ist eine Bestimmungsvorrichtung bekannt. Aus der WO 2018/035082 A1 ist eine Erntemaschine für Wurzelfrüchte bekannt, die einen Überladeförderer umfasst, um das Erntegut in ein Transportfahrzeug überzuladen und so zu bergen. An dem Überladeförderer ist eine Sensoreinrichtung, beispielsweise ein Lidar-Sensor, ein Ultraschallsensor oder eine Bilderfassungseinrichtung zur Erfassung von Daten des Ernteguts, beispielsweise Größe, Volumen, Qualität oder Ertrag, angeordnet.Auf Grundlage dieser Daten ist es möglich, Ertragskarten der bearbeiteten landwirtschaftlichen Fläche oder dergleichen zu erzeugen.

Eine Aufgabe der Erfindung ist es, eine Vorrichtung aufzuzeigen, die es erlaubt der Ernteprozess mit einfachen und kostengünstigen Mitteln zu verbessern.

Weiterhin wird eine verbesserte Erfassung des Ertrages oder der Qualität der geernteten Wurzelfrüchte angestrebt.

Zur Lösung dieser Aufgabe wird eine Erntemaschine gemäß dem Patentanspruch 1 vorgeschlagen.

Der Vorteil der erfindungsgemäßen Vorrichtung besteht u.a. darin, dass eine kontinuierliche Erfassung der Qualität oder der Erntebedingungen während des Erntens durchgeführt werden kann.

Weiterbildungen der Erfindung sind Gegenstand der Unteransprüche.

Wenn im Folgenden jeweils ein funktionales Merkmal offenbart ist, so ist damit auch das entsprechende Verfahrensmerkmal explizit mit als offenbart anzusehen.

Die Erfindung wird im Folgenden anhand der Figuren an einem Ausführungsbeispiel näher erläutert. Es zeigen:

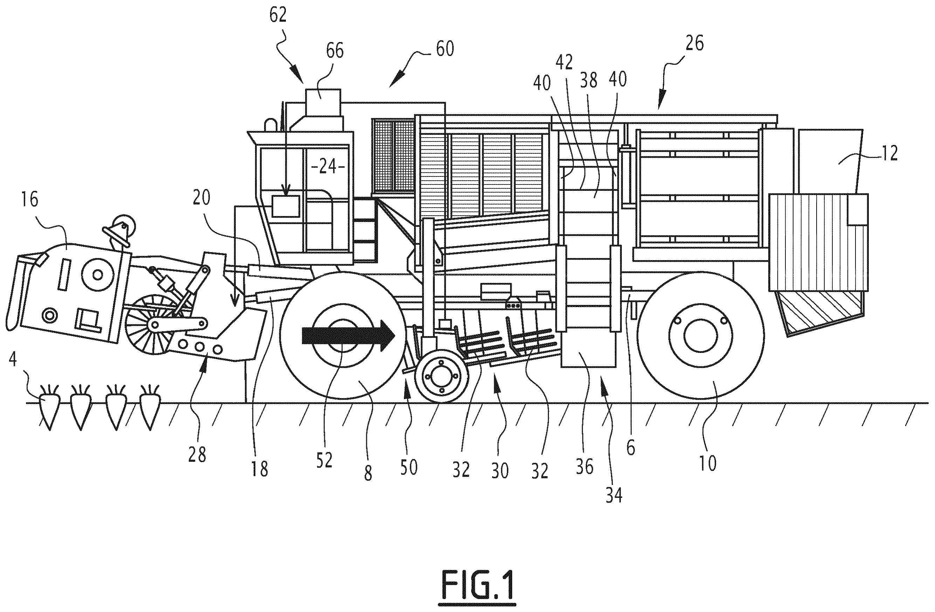

Fig. 1 : in Seitendarstellung ein Ernte- oder Rodefahrzeug zum Roden bzw. Ernten von Wurzelfrüchten, insbesondere Zuckerrüben;

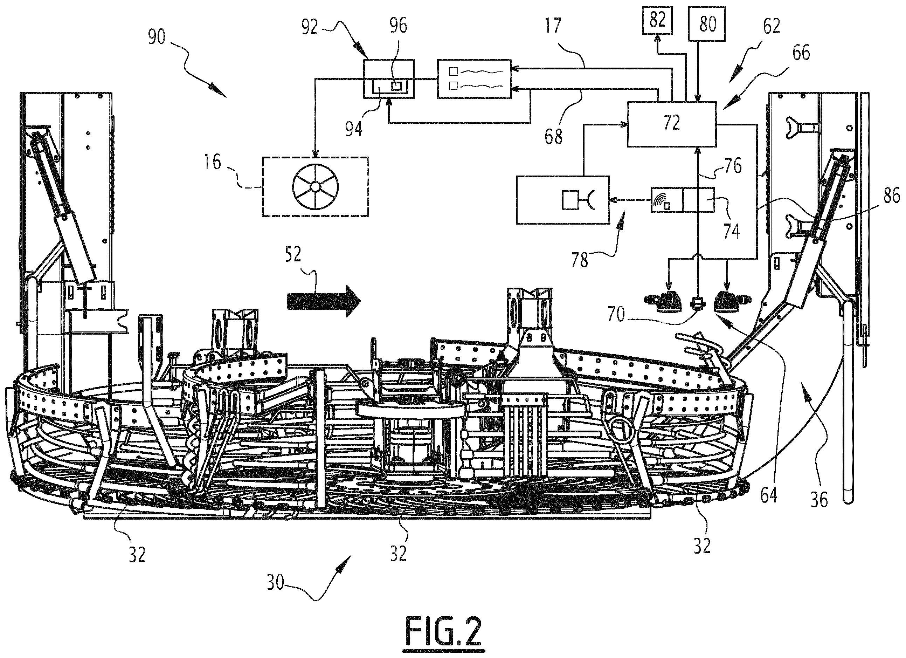

Fig. 2 : in Seitenansicht eine Transportstrecke des Fahrzeugs der Figur 1 sowie eine schematische Ansicht verschiedener Komponenten der Bestimmungsvorrichtung der Erfindung; und

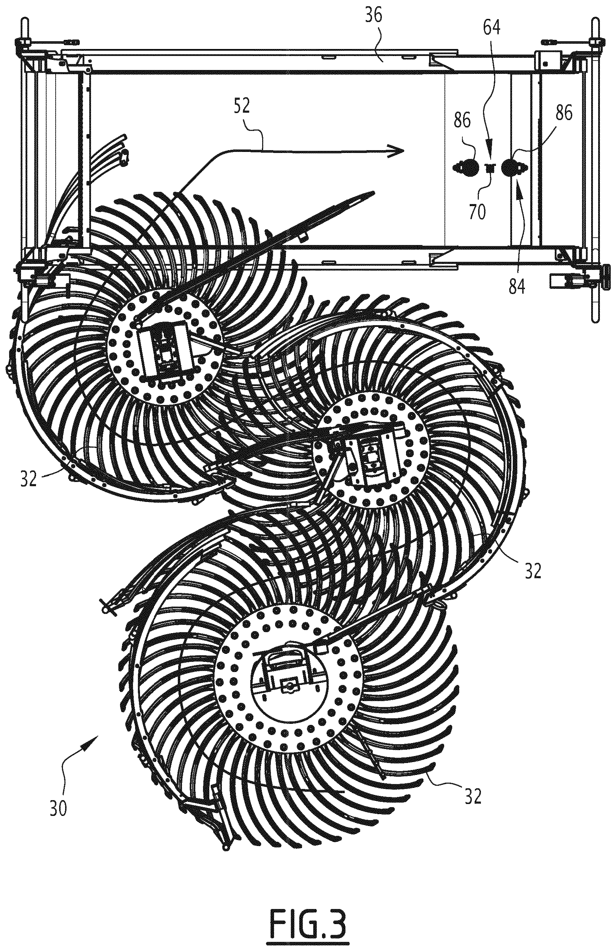

Fig. 3 : eine Aufsicht der Transportstrecke der Figur 2.

Das in den Figuren allgemein mit 2 bezeichnete Ernte- oder Rodefahrzeug dient zum Ernten oder Roden von Zuckerrüben 4 und beinhaltet eine Rahmen 6, an welchem Fahrzeugachsen mit entsprechenden Rädern 8, 10 vorgesehen sind. Zumindest die vorderen Räder 8 und die hinteren Räder 10 sind durch einen Antrieb 12 des Fahrzeugs 2 angetrieben.

An der Vorderseite des Rahmens 6 ist eine Rodeeinheit 16 vorgesehen, und zwar über Stellelemente, die bei der dargestellten Ausführungsform Hydraulikzylinder 18 und 20 sind, heb- und senkbar, so dass das Rodeeinheit 16 in bekannter Weise angehoben und für das Roden bzw. Ernten abgesenkt werden kann. An der Vorderseite des Rahmens 6 ist ein Fahrerhaus 24 vorgesehen, auf welches dann zur Rückseite des Rahmens 6 hin der an seiner Oberseite eine Lagerungseinheit 26, z. B. in Form eines offenen Bunkers zur Aufnahme der geernteten Zuckerrüben 4 folgt.

Das Roden der Zuckerrüben 4 erfolgt mit der Rodeeinheit 16 gleichzeitig in mehreren Reihen. Die geernteten Zuckerrüben 4 gelangen dabei von der Rodeeinheit 16 über eine erste Transporteinheit 28, sowie über eine anschließende Reinigungseinheit 30, die bei der dargestellten Ausführungsform von mehreren aufeinander folgenden und jeweils rotierend angetriebenen Siebsternen 32 gebildet ist, an eine zweite Transporteinheit 34. Die erste Transporteinheit 28 umfasst Transportwalzen. Die zweite Transporteinheit 34 umfasst ein Zuführband 36. Das Zuführband 36 fördert die geerntete Rüben zur Aufgabeposition einer dritten Transporteinheit, im vorliegenden Fall einen Aufwärtsförderers 38.

Der Aufwärtsförderer 38 umfasst mindestens einen endlos umlaufenden antreibbaren Gurt 40. An dem Gurt sind in gleichmäßigen Abständen Mitnehmer 42 vorgesehen, die über die Seite des Gurtes 40 wegstehen und Auflagen für die Zuckerrüben 4 bilden.

Das Ernte- oder Rodefahrzeug 2 umfasst eine Fruchtflussvorrichtung 50, die die Rodeeinheit 16 zum Roden der Früchte, eine oder mehrere Transporteinheiten zum Transportieren der gerodeten Früchte, zum Beispiel die Transporteinheiten 28 und 34, die Reinigungseinheit 30 zum Reinigen der gerodeten Früchte, und die Lagerungseinheit 26 der gerodeten Früchte umfasst.

Die Fruchtflussvorrichtung 50 ist dazu ausgebildet, einen Strom 52 geernteter Früchte 4 zu behandeln. Die Fruchtflussvorrichtung kann die Rodeeinheit 16 zum Roden der Früchte, die Transporteinheit 34 zum Transportieren der gerodeten Früchte, die Reinigungseinheit 30 zum Reinigen der gerodeten Früchte, und die Lagerungseinheit 26 der gerodeten Früchte in jeder beliebigen technisch möglichen Kombination umfassen.

Das Ernte- oder Rodefahrzeug 2 umfasst ebenfalls einen Bordrechner 60, der dazu ausgebildet ist, die einzelnen Einheiten des Fahrzeugs zu steuern. Hierzu umfasst das Fahrzeug 2 die entsprechenden Sensoren, Ein/Ausgabemittel wie Bildschirme und Tastaturen, sowie Aktoren, die mit dem Bordrechner verbunden sind.

Das Ernte- oder Rodefahrzeug 2 umfasst weiterhin eine Bestimmungsvorrichtung 62 zur Bestimmung eines Datums des Stromes der geernteten Früchte.

Die Bestimmungsvorrichtung 62 umfasst
- eine Sensoreinrichtung 64 zur Erfassung eines Rohdatums des Stroms 52,
- eine mit der Sensoreinrichtung 64 verbundene Bestimmungseinrichtung 66 zur Bestimmung eines Datums des Stromes 52 basierend auf dem Rohdatum.

Das zu bestimmende Datum des Stromes ist erfindungsgemäß ein Qualitätsdatum oder ein Ertragsdatum des Stromes, wobei das Qualitätsdatum oder das Ertragsdatum eine Information über einen Nettoertrag der geernteten Früchte widerspiegelt.

Die Bestimmungsvorrichtung 62 ist dazu ausgebildet, z.B. über eine Signalleitung 68, ein Signal auszugeben, das dem Qualitätsdatum oder dem Ertragsdatum entspricht.

Das Qualitätsdatum kann mindestens eines oder mehrere der folgenden Daten des Stromes 52 umfassen und dies in jeder beliebigen Kombination und/oder Teilkombination: Oberflächenverletzungen der Früchte, Brüche der Früchte, Abschnitte der Früchte, Erdanhänge, Verunreinigungen, Blattanhänge, Unkrautanhänge, oder Unkräuter.

Das Ertragsdatum des Stromes 52 kann ein Nettogewicht der nutzbaren Früchte umfassen sowie ein Bruttogewicht umfassend das Nettogewicht und das Gewicht des nicht nutzbaren Anteils des Stromes.

Die Information über den Nettoertrag ist eine Information, die angibt welche nutzbare Masse die Früchte des Stromes zum Zeitpunkt der Ernte aufweisen. Zum Beispiel ist die Information über den Nettoertrag eine Information basierend auf dem Verletzungsgrad der Früchte (Qualitätsdatum). Auf Basis dieses Verletzungsgrades kann eine Abschätzung vorgenommen werden, welcher Anteil der Früchte z.B. durch Verrottung oder Zuckerabbau durch Lagerung, bis zur Weiterbehandlung nicht mehr nutzbar sein wird. Durch die Information über den Nettoertrag kann also auch eine Aussage über den zukünftigen Nutzertrag der geernteten Früchte getroffen werden.

Die Sensoreinrichtung 64 umfasst eine Sensoreinheit 70, die
- eine 2D-Kamera, oder/und
- eine 3D-Kamera, oder/und
- einen Radarsensor, oder/und
- einen Sensor zur Erfassung des Fruchtflussgewichts, oder/und
- einen radiometrischen Sensor, oder/und
- einen kapazitiven Sensor, oder/und
- einen Lidarsensor aufweist.

Das Rohdatum ist z.B. das von der Kamera erzeugte Bild oder das von dem Sensor ausgegebene Signal.

Im vorliegenden Falle umfasst die Sensoreinrichtung 64 bzw. die Sensoreinheit 70, eine 2D-Kamera, die ein Bild oder eine Folge von Bildern des Stromes 52 geernteter Früchte generiert, der von der Rodeeinheit 16 zur Lagerungseinheit 26 gefördert wird.

Genauer ist die Sensoreinrichtung 64 vorteilhafterweise so angeordnet, dass sie den Fruchtfluss auf der zweiten Transporteinheit 34 (bzw. dem Zuführband 36), die zwischen der Reinigungseinheit 30 (bzw. den Siebsternen 32) und der dritten Transporteinheit (bzw. dem Aufwärtsförderer 38) angeordnet ist, erfasst. Alternativ kann die Sensoreinrichtung 64 auch den Fruchtfluss auf dem Aufwärtsförderer 38 erfassen.

Die Bestimmungseinrichtung 66 umfasst eine Rechnereinheit 72 zur Bestimmung des Qualitätsdatums oder des Ertragsdatums. Gemäß dem dargestellten Ausführungsbeispiel ist die Rechnereinheit 72 von der Sensoreinheit 70 entfernt und durch Kommunikationsmittel 74 mit der Sensoreinheit verbunden. Beide Einheiten 70, 74 sind jedoch auf dem Ernte- und Rodefahrzeug 2 angeordnet.

Die Rechnereinheit 72 kann ein eigener Bordrechner des Fahrzeugs sein, oder ein Teil des Bordrechners 60.

Die Kommunikationsmittel 74 umfassen z.B. drahtgebundene Kommunikationsmittel 76, wie Kabel oder Datenbusse. Alternativ umfassen die Kommunikationsmittel 74 drahtlose Kommunikationsmittel 78, wie z.B. Bluetooth, oder WiFi-Kommunikationsstrecken.

Alternativ und in nicht dargestellter Weise ist die Rechnereinheit 72 mit der Sensoreinheit 70 mechanisch verbunden und bildet mit dieser ein gemeinsam handhabbares Modul.

Alternativ umfassen die Kommunikationsmittel 74 drahtlose Kommunikationsmittel und die Rechnereinheit 72 oder ein Teil der Rechnereinheit ist nicht auf dem Fahrzeug angebracht und ist nicht mechanisch mit der Sensoreinheit 70 verbunden. In diesem Falle ist die Rechnereinheit 72 ein Rechner, der mit dem Internet verbunden ist und die drahtlosen Kommunikationsmittel erlauben der Rechnereinheit die Signale der Sensoreinheit 70 zu empfangen und verteilt zu verarbeiten (Cloud Rechner /Internet).

Die Bestimmungseinrichtung 66 kann zusätzlich eine Einheit 80 zur Bereitstellung eines zusätzlichen Datums aufweisen, welche dazu ausgebildet ist zusätzliche maschineninterne und/oder externe Daten bereitzustellen, wir z.B. Daten von anderen Erntemaschinen, Wetterdaten oder Bodendaten.

Die Rechnereinheit 72 ist dabei dazu ausgebildet aus dem zusätzlichen Datum und dem Rohdatum der Sensoreinrichtung 64 bzw. der Sensoreinheit 70 das Qualitätsdatum oder das Ertragsdatum zu generieren. Zum Beispiel können aus den Wetterdaten der gerade gerodeten Fläche, zusammen mit den Bildinformationen der 2D-Kamera, genauere Aussagen über die Qualität des Fruchtflusses getroffen werden.

In analoger Weise kann die Bestimmungseinrichtung dazu ausgebildet sein, aus dem Sensordatum oder aus dem Rohdatum oder aus dem Qualitätsdatum oder dem Ertragsdatum ein Umgebungsdatum zu generieren, das insbesondere die Bodenart, die Bodenfeuchte, und/oder die Witterungsbedingungen widerspiegelt. Hierzu kann die Bestimmungseinrichtung 66 eine Einheit 82 zur Generierung des Umgebungsdatums enthalten.

Die Bestimmungsvorrichtung 66 umfasst weiterhin mindestens ein Bestimmungshilfsmittel 84, das die Erfassungsgüte der Sensorvorrichtung erhöht oder unterstützt. Das Bestimmungshilfsmittel 84 umfasst im vorliegenden Fall ein zusätzliches Beleuchtungsmittel 86, das das Bildfeld der Sensorvorrichtung 70 ausleuchtet.

Alternativ oder zusätzlich kann das Bestimmungshilfsmittel 84 eines oder mehrerer der folgenden Elemente umfassen: zumindest einen Gutflussbypass oder/und eine Gutreinigungseinrichtung oder/und eine Sensorreinigungseinrichtungen oder/und eine Abschirmung vor Störeinflüssen.

Der Gutflussbypass ist z.B. eine Bypassstrecke auf der ein erster Teil des Stromes entlanggeführt wird, so dass dieser Teil von der Sensorvorrichtung 70 erfasst wird und ein zweiter Teil des Stromes an der Sensorvorrichtung vorbeigeführt wird und nicht erfasst wird. Damit kann die Erfassungsgüte zumindest des ersten Teils des Stromes verbessert werden. Insbesondere kann dadurch der Rechenaufwand zur Bestimmung des Qualitätsdatums oder Ertragsdatums gering gehalten werden und die Erfassungsbedingungen für die Sensoren (Kamera) verbessert werden (z.B. guter Kontrast).

Die Gutreinigungseinrichtung kann zum Beispiel eine Sprüheinrichtung oder eine Bürsteneinrichtung sein, die die geernteten Früchte reinigt, bevor sie von der Sensorvorrichtung 70 erfasst werden.

Die Sensorreinigungseinrichtung kann z.B. eine Wischeinrichtung sein, die die Sensoroberfläche reinigt.

Die Abschirmung kann z.B. ein Schutzblech sein, das die Sensorvorrichtung vor Schmutz schützt.

Weiterhin umfasst die Erntemaschine eine Behandlungsvorrichtung 90 zur Behandlung des Stroms 52. Die Behandlungsvorrichtung 90 umfasst die Bestimmungsvorrichtung 66 sowie eine Steuereinheit 92 zur Ansteuerung der Fruchtflussvorrichtung der Bestimmungsvorrichtung in Abhängigkeit des Qualitätsdatums oder des Ertragsdatums dahingehend, dass der Nettoertrag ausgehend vom aktuellen Nettoertrag gesteigert wird.

Dazu ist die Steuereinheit 92 z.B. an die Signalleitung 68 angeschlossen, und erhält dadurch das Qualitätsdatum oder das Ertragsdatum.

Ausgehend vom aktuellen Qualitätsdatum oder Ertragsdatum kann die Steuereinheit 92 so auf die Förderstrecke einwirken, z.B. die Rodeeinheit 16 so ansteuern, dass der Nettoertrag gesteigert wird und vorzugsweise ein maximal möglicher Nettoertrag erhalten wird. Beispielsweise kann die Steuereinheit 92 die Höheneinstellung eines Nachköpfers der Rodeeinheit oder die Höheneinstellung von Rodeelementen so verändern, dass die Rüben weniger bzw. ein Minimum an Verletzungen aufweisen. Die Steuereinheit 92 umfasst z.B. eine Recheneinheit 94.

Vorzugsweise umfasst die Steuereinheit Mittel zum maschinellen Lernen 96, die ausgehend von historischen Daten z.B. aus der Ansteuerung der Fruchtflussvorrichtung durch die Steuereinheit 92 und den daraus resultierenden Änderungen des Nettoertrags, die Parameter der Ansteuerung der Steuereinheit ändern. Die Parameter werden hierbei dahingehend geändert, dass bei gegebenen Rahmenbedingungen, die Ansteuerung durch die Steuereinheit dahingehend geändert wird, dass sich der Nettoertrag erhöht.

## Patentansprüche

1. Erntefahrzeug (2) zum Ernte von Zuckerrüben, umfassend eine Behandlungsvorrichtung, die Behandlungsvorrichtung umfassend
eine Bestimmungsvorrichtung (62) zur Bestimmung eines Datums beim Ernten von Früchten (4), umfassend
- eine Fruchtflussvorrichtung (50) zur Behandlung eines Stroms (52) geernteter Früchte,
- eine Sensoreinrichtung (64) zur Erfassung eines Rohdatums des Stroms,
- eine mit der Sensoreinrichtung verbundene Bestimmungseinrichtung (66) zur Bestimmung eines Datums des Stromes basierend auf dem Rohdatum, wobei die Fruchtflussvorrichtung eine Rodeeinheit (16) zum Roden der Früchte und eine Transporteinheit (34) zum Transportieren der gerodeten Früchte umfasst,
wobei
das Datum ein Qualitätsdatum oder ein Ertragsdatum des Stromes ist,
die Bestimmungsvorrichtung dazu ausgebildet ist ein Signal auszugeben, das dem Qualitätsdatum oder dem Ertragsdatum entspricht,
und wobei das Qualitätsdatum oder das Ertragsdatum eine Information über einen Nettoertrag der geernteten Früchte widerspiegelt, wobei
- die Fruchtflussvorrichtung eine Lagerungseinheit (26) der gerodeten Früchte umfasst,
- die Bestimmungsvorrichtung (62) zur Bestimmung eines Datums beim Ernten von Früchten (4), eine Bestimmungsvorrichtung zur Bestimmung eines Datums beim Ernten von Zuckerrüben ist,
- die Fruchtflussvorrichtung eine Reinigungseinheit (30) zum Reinigen der gerodeten Früchte umfasst, und
- die Behandlungsvorrichtung weiterhin umfasst:
eine Steuereinheit (90) eingerichtet, die Fruchtflussvorrichtung der Bestimmungsvorrichtung in Abhängigkeit des Qualitätsdatums oder des Ertragsdatums dahingehend anzusteuern,
dass der Nettoertrag ausgehend vom aktuellen Nettoertrag gesteigert wird und, wobei die Erntemaschine einen Aufwärtsförderer (38) umfasst, und wobei entweder
- die Sensoreinrichtung (64) so angeordnet ist, dass sie den Strom (52) geernteter Früchte auf der Transporteinheit (34) erfassen kann, wobei die Transporteinheit (34) zwischen der Reinigungseinheit (30) und dem Aufwärtsförderer (38) angeordnet ist, oder
- die Fruchtflussvorrichtung den Aufwärtsförderer (38) umfasst und die Sensoreinrichtung (64) so angeordnet ist, dass sie den Strom geernteter Früchte auf dem Aufwärtsförderer (38) erfassen kann.

2. Erntefahrzeug nach Anspruch 1, wobei
das Qualitätsdatum mindestens eines der folgenden Daten umfassen: Oberflächenverletzungen der Früchte, Brüche der Früchte, Abschnitte der Früchte, Erdanhänge, Verunreinigungen, Blattanhänge, Unkrautanhänge, oder Unkräuter, und/oder die Ertragsdaten ein Nettogewicht der nutzbaren Früchte umfassen und ein Bruttogewicht umfassend das Nettogewicht und das Gewicht des nicht nutzbaren Anteils des Stromes (52).

3. Erntefahrzeug nach Anspruch 1 oder 2, wobei
die Sensoreinrichtung (64) eine Sensoreinheit (70) enthält, die
- eine 2D-Kamera, oder/und
- eine 3D-Kamera, oder/und
- einen Radarsensor, oder/und
- einen Sensor zur Erfassung des Fruchtflussgewichts, oder/und
- einen radiometrischen Sensor, oder/und
- einen kapazitiven Sensor, oder/und
- einen Lidarsensor
umfasst.

4. Erntefahrzeug nach Anspruch 3, wobei
die Bestimmungseinrichtung eine Rechnereinheit (72) zur Bestimmung des Qualitätsdatums oder des Ertragsdatums umfasst,
- wobei die Rechnereinheit (72) von der Sensoreinheit (70) entfernt ist und durch Kommunikationsmittel (74) mit der Sensoreinheit verbunden ist oder
- wobei die Rechnereinheit mit der Sensoreinheit mechanisch verbunden ist und mit dieser ein gemeinsam handhabbares Modul bildet, und
insbesondere
entweder wobei die Rechnereinheit ein Bordrechner (70) eines Fahrzeugs ist,
oder wobei die Kommunikationsmittel drahtlose Kommunikationsmittel (78) umfassen und die Rechenreinheit nicht auf einem Fahrzeug angebracht sind und nicht mechanisch mit der Sensoreinheit verbunden sind.

5. Erntefahrzeug nach einem der vorhergehenden Ansprüche, wobei die Bestimmungseinrichtung (66) eine Einheit (80) zur Bereitstellung eines zusätzlichen Datums aufweist, welches dazu ausgebildet ist zusätzliche maschineninterne und/oder externe Daten bereitzustellen, insbesondere Daten von anderen Erntemaschinen, Wetterdaten oder Bodendaten.

6. Erntefahrzeug nach einem der vorhergehenden Ansprüche, wobei die Bestimmungseinrichtung (66) dazu ausgebildet ist, aus dem Sensordatum oder aus dem Rohdatum oder aus dem Qualitätsdatums oder dem Ertragsdatum ein Umgebungsdatum zu generieren, das insbesondere die Bodenart, die Bodenfeuchte, und/oder die Witterungsbedingungen widerspiegelt.

7. Erntefahrzeug nach einem der vorhergehenden Ansprüche, wobei die Bestimmungsvorrichtung mindestens ein Bestimmungshilfsmittel (84) umfasst, das die Erfassungsgüte der Sensorvorrichtung erhöht oder unterstützt, insbesondere wobei das Bestimmungshilfsmittel
- ein zusätzliches Beleuchtungsmittel- oder/und
- einen zumindest ein Gutflussbypass oder/und
- eine Gutreinigungseinrichtungen oder/und
- eine Sensorreinigungseinrichtungen oder/und
- eine Abschirmungen vor Störeinflüssen umfasst.

8. Erntefahrzeug nach einem der vorhergehenden Ansprüche, **dadurch gekennzeichnet, dass** die Steuereinheit Mittel (94) zum maschinellen Lernen umfasst, die ausgehend von historischen Daten der Ansteuerung der Fruchtflussvorrichtung durch die Steuereinheit und den daraus resultierenden Änderung des Nettoertrags, die Parameter der Ansteuerung der Steuereinheit ändern und vorzugsweise dahingehend, dass bei gegebenen Rahmenbedingungen die Ansteuerung dahingehend geändert wird, dass der Nettoertrag erhöht wird.

## Claims

1. Harvesting vehicle (2) for harvesting sugar beet,
- comprising a handling device, the
handling device comprising
a determination device (62) for determining a date when harvesting fruits (4), comprising
- a fruit flow device (50) for handling a flow (52) of harvested fruit,
- a sensor device (64) for detecting raw data of the flow,
- determination device (66) connected to the sensor device for determining a date of the flow based on the raw date, the fruit flow device comprising a lifting unit (16) for lifting the fruit and a transport unit (34) for transporting the lifted fruit,
wherein
the date is a quality date or a yield date of the flow, the determination device is adapted to output a signal corresponding to the quality date or the yield date,
and wherein the quality date or the yield date reflects information about a net yield of the harvested fruit, wherein
- the fruit flow device comprises a storage unit (26) for the lifted fruit,
- the determination device (62) for determining a date when harvesting fruit (4) is a determination device for determining a date when harvesting sugar beet,
- the fruit flow device comprises a cleaning unit (30) for cleaning the lifted fruit, and
- the handling device further comprises:
a control unit (90) set up to control the
fruit flow device of the
the determination device depending on the quality data or the yield data in such a way that the net yield is increased based on the current
net yield, and wherein the harvesting machine comprises an upward conveyor (38), and wherein
either
- the sensor device (64) is arranged so that it can detect the flow (52) of harvested fruit on the transport unit (34), wherein the transport unit (34) is arranged between the cleaning unit (30) and the
upward conveyor (38)
or
- the fruit flow device comprises the upward conveyor (38) and the sensor device (64) is arranged so that it can detect the flow of harvested fruit on the upward conveyor (38).

2. Harvesting vehicle according to claim 1, wherein
the quality date must include at least one of the following data: surface damage to the fruit, broken fruit, fruit segments, soil attachments, impurities, leaf attachments, weed attachments, or weeds, and/or the yield data includes a net weight of usable fruit and a gross weight comprising the net weight and the weight of the unusable portion of the flow (52).

3. Harvesting vehicle according to claim 1 or 2, wherein
the sensor device (64) contains a sensor unit (70), which comprises
- a 2D camera, or/and
- a 3D camera, or/and
- a radar sensor, or/and
- a sensor for recording the fruit flow weight, or/and
- a radiometric sensor, or/and
- a capacitive sensor, or/and
- a lidar sensor

4. Harvesting vehicle according to claim 3, wherein
the determination device comprises a computer unit (72) for determining the quality date or the yield date,
- wherein the computer unit (72) is remote from the sensor unit (70) and is connected to the sensor unit by communication means (74), or
- wherein the computer unit is mechanically connected to the sensor unit and forms a jointly manageable module with the latter, and
in particular
either wherein the computer unit is an on-board computer (70) of a vehicle, or wherein the communication means comprise wireless communication means (78) and the computer unit is not mounted on a vehicle and is not mechanically connected to the sensor unit.

5. Harvesting vehicle according to one of the preceding claims, wherein the determination device (66) comprises a unit (80) for providing additional data, which is designed to provide additional machine-internal and/or external data, in particular data from other
harvesters, weather data or soil data.

6. Harvesting vehicle according to one of the preceding claims, wherein the determination device (66) is designed to generate an environmental date from the sensor date or from the raw date or from the quality date or from the yield date, which date reflects in particular the soil type, the soil moisture and/or the weather conditions.

7. Harvesting vehicle according to one of the preceding claims, wherein the determination device comprises at least one determination aid (84) which increases or supports the detection quality of the sensor device, in particular wherein the determination aid comprises
- an additional means of illumination and/or
- at least one crop flow bypass and/or
- crop cleaning equipment or/and
- sensor cleaning equipment or/and
- shielding against interferences.

8. Harvesting vehicle according to one of the preceding claims, **characterised in that** the control unit comprises means (94) for machine learning which, on the basis of historical data of the actuation of the fruit flow device by the control unit and the resulting change in the net yield, change the parameters of the actuation of the control unit and preferably in such a way that, under given general conditions, the actuation is changed in such a way that the net yield is increased.

## Revendications

1. Véhicule de récolte (2) pour la récolte de betteraves sucrières,
comprenant un dispositif de traitement, le
dispositif de traitement comprenant
un dispositif de détermination (62) pour déterminer une donnée lors de la récolte de fruits (4), comprenant
- un dispositif d'écoulement de fruits (50) pour traiter un flux (52) de fruits récoltés,
- un équipement de détection (64) pour acquérir une donnée brute du flux,
- un équipement de détermination (66) relié à l'équipement de détection pour déterminer une donnée du flux sur la base de la donnée brute, dans lequel le dispositif d'écoulement de fruits comprend une unité d'arrachage (16) pour arracher les fruits et une unité de transport (34) pour transporter les fruits arrachés,
dans lequel
la donnée est une donnée de qualité ou une donnée de rendement du flux, le dispositif de détermination est réalisé pour émettre un signal qui correspond à la donnée de qualité ou à la donnée de rendement,
et dans lequel la donnée de qualité ou la donnée de rendement reflète une information sur un rendement net des fruits récoltés, dans lequel
- le dispositif d'écoulement de fruits comprend une unité de stockage (26) des fruits arrachés,
- le dispositif de détermination (62) pour déterminer une donnée lors de la récolte de fruits (4) est un dispositif de détermination pour déterminer une donnée lors de la récolte de betteraves sucrières,
- le dispositif d'écoulement de fruits comprend une unité de nettoyage (30) pour nettoyer les fruits arrachés, et
- le dispositif de traitement comprend en outre :
une unité de commande (90) conçue pour commander
le dispositif d'écoulement de fruits du
dispositif de détermination en fonction de la donnée de qualité ou de la donnée de rendement de telle sorte
que le rendement net soit augmenté en partant du rendement net
actuel et dans lequel la machine de récolte comprend un convoyeur ascendant (38), et dans lequel
soit
- l'équipement de détection (64) est disposé de sorte qu'il puisse acquérir le flux (52) de fruits récoltés sur l'unité de transport (34), dans lequel l'unité de transport (34) est disposée entre l'unité de nettoyage (30) et le
convoyeur ascendant (38),
soit
- le dispositif d'écoulement de fruits comprend le convoyeur ascendant (38) et l'équipement de détection (64) est disposé de sorte qu'il puisse acquérir le flux de fruits récoltés sur le convoyeur ascendant (38).

2. Véhicule selon la revendication 1, dans lequel
la donnée de qualité comprend au moins une des données suivantes : des dommages en surface des fruits, des cassures des fruits, des sections des fruits, de la terre restée accrochée, des impuretés, des feuilles restées accrochées, des mauvaises herbes restées accrochées, ou des mauvaises herbes, et/ou les données de rendement comprennent un poids net des fruits utilisables et un poids brut comprenant le poids net et le poids de la partie non utilisable du flux (52).

3. Véhicule de récolte selon la revendication 1 ou 2, dans lequel l'équipement de détection (64) contient une unité de détection (70) qui comprend
- une caméra 2D, ou/et
- une caméra 3D, ou/et
- un capteur radar, ou/et
- un capteur pour acquérir le poids du flux de fruits, ou/et
- un capteur radiométrique, ou/et
- un capteur capacitif, ou/et
- un capteur lidar

4. Véhicule de récolte selon la revendication 3, dans lequel
l'équipement de détermination comprend une unité de calcul (72) pour déterminer la donnée de qualité ou la donnée de rendement,
- dans lequel l'unité de calcul (72) est éloignée de l'unité de détection (70) et est reliée à l'unité de détection par des moyens de communication (74) ou
- dans lequel l'unité de calcul est reliée mécaniquement à l'unité de détection et forme avec celle-ci un module manipulable en commun, et
en particulier
soit dans lequel l'unité de calcul est un ordinateur de bord (70) d'un véhicule, soit dans lequel les moyens de communication comprennent des moyens de communication sans fil (78) et l'unité de calcul ne sont pas montées sur un véhicule et ne sont pas reliées mécaniquement à l'unité de détection.

5. Véhicule de récolte selon l'une quelconque des revendications précédentes, dans lequel l'équipement de détermination (66) présente une unité (80) pour la mise à disposition d'une donnée supplémentaire, qui est réalisée pour mettre à disposition des données supplémentaires internes et/ou externes à la machine, en particulier des données d'autres
machines de récolte, des données météorologiques ou des données relatives au sol.

6. Véhicule de récolte selon l'une quelconque des revendications précédentes, dans lequel l'équipement de détermination (66) est réalisé pour générer, à partir de la donnée de capteur ou de la donnée brute ou de la donnée de qualité ou de la donnée de rendement, une donnée d'environnement qui reflète notamment le type de sol, l'humidité du sol, et/ou les conditions météorologiques.

7. Véhicule de récolte selon l'une quelconque des revendications précédentes, dans lequel le dispositif de détermination comprend au moins un auxiliaire de détermination (84) qui augmente ou favorise la qualité d'acquisition du dispositif de détection, en particulier dans lequel l'auxiliaire de détermination comprend
- un moyen d'éclairage supplémentaire ou/et
- au moins une dérivation du flux de marchandises ou/et
- un équipement de nettoyage du produit ou/et
- un équipement de nettoyage des capteurs ou/et
- une protection contre les influences perturbatrices.

8. Véhicule de récolte selon l'une quelconque des revendications précédentes, **caractérisé en ce que** l'unité de commande comprend des moyens (94) d'apprentissage automatique qui, à partir des données historiques de la commande du dispositif d'écoulement de fruits par l'unité de commande et de la variation du rendement net qui en résulte, modifient les paramètres de la commande de l'unité de commande et de préférence de telle sorte que, dans des conditions générales données, la commande soit modifiée de telle sorte que le rendement net soit augmenté.
